# EUROPEAN PATENT APPLICATION

(11) **EP 4 213 321 A1**
(43) Date of publication of application: **19.07.2023**
(21) Application number: 22151102.5
(22) Date of filing: 12.01.2022
(51) Int. Cl.: H02G 1/04, H02G 1/08

(54) **CABLE PULLING DEVICE**

(71) Applicant: Siemens Gamesa Renewable Energy A/S, 7330 Brande (DK)
(72) Inventor: Tummala, Shiva Rahul, 521137 Poranki, Vijayawada (IN); Zohra, Fathima, 560068 Bangalore (IN)
(74) Representative: SGRE-Association

(57) **Abstract**

A cable pulling device comprising two inner plates (40a, 40b), two outer plates (50a, 50b) and one first roller (10). The two inner plates (40a, 40b) arranged in the protruding end (30a, 30b) of the first shaft and two outer plates (50a, 50b arranged in the protruding end (30a, 30b) of the first shaft (20) beside the inner plates (40a, 40b). The two inner plates (40a, 40b) and the two outer plates (50a, 50b) comprise a pivoting hole (60a, 60b, 90a, 90b), positioning hole (70a, 70b, 100a, 100b) and adjusting holes (80a₁, 80a₂, 80b₁, 80b₂, 110a, 110b). The inner plates (40a, 40b) aligned with its corresponding outer plates (50a, 50b). Pivoting rods (120a, 120b) are introduced into pivoting holes (60a, 90a, 60b, 90b) to join the inner plates (40a, 40b) with its corresponding outer plates (50a, 50b), consequently able to rotate respect to them.

## Description

### FIELD OF THE INVENTION

The present invention relates to a cable pulling device that is adjustable in horizontal and vertical position, to be used in any wind turbine model regardless the different design constrains and sizes between them.

Furthermore, the invention relates to a cable pulling device that it may be hooked to the tower structure, it further comprises a hooking element arranged between the inner plates and the outer plates. This gives the advantage that the cable may be pulled from different points along the tower during its construction.

### BACKGROUND OF THE INVENTION

Nowadays in the field of renewable energies, the development and innovation in recent decades has resulted in increasing dimensions and power of wind turbines. The dimensions of a wind turbine to another may vary widely, leading to redesign many components for each wind turbine model. One of the components affected is the cable pulling device, which is required for pulling HV cables from ground to the nacelle of the wind turbine.

For each new wind turbine model, a cable pulling device needs to be designed based on the cable positions in the tower. However, the position of the platforms in the tower are mostly the same for all the models. Furthermore, it would be an advantage to have an adjustable cable pulling device that could be hooked in the middle of the tower structure, not only in the nacelle platform, in case cables needed to be pulled from different points of the tower. Hence, an adjustable cable pulling device that could be used in any wind turbine model and in different positions of the tower regardless the design constraints, variations and dimensions of the tower may avoid the need to design a new cable pulling device for each new wind turbine model.

CN107872028A provides a cable pulling and releasing auxiliary device detachably mounted between any two cross braces of a cable tray. It comprises a bracket with a pair of support members arranged in parallel, rollers are respectively connected to the two supporting members, a bottom plate, a supporting plate vertically connected with the bottom plate. The supporting plate is provided with a plurality of U-shaped holes arranged along of its length direction at intervals, and the ends of the rotating shafts of the rollers are detachably mounted on the supporting plates to change its vertical position.

US7419136B2 discloses a cable pulling device having a roller support structure mounted on a frame comprising a first side plate and a second side plate with a set of rollers between the plates. The structure has an opening in each side of the structure, wherein the cable is introduced in one opening, passing over the rollers and pulled out through the second conduit.

A typical disadvantage of such known cable pulling devices is that the position of the rollers is fixed and cannot be adjusted neither in vertical nor horizontal position, or just one of them, which leads to limitations in its use and the need to redesign some components to suit to the design constrains of the place where is going to be used, specifically in this case, for every wind turbine model.

It is therefore a goal of the present invention to provide a cable pulling device that may be adjusted to any wind turbine model, regardless the different design constrains between them. The rollers of the cable pulling device may be adjustable in horizontal and vertical position, so it may be used in any wind turbine model.

A further goal of the invention is to provide a cable pulling device that may be hooked to the tower structure, so the cable may be pulled from different points along the tower during its construction.

### SUMMARY OF THE INVENTION

The object of the invention is achieved by the independent claims. The dependent claims describe advantageous developments and modifications of the invention.

In accordance with the claim there is provided a cable pulling device comprised by two inner plates, two outer plates and a first roller with a first shaft, which may pass through the first roller and its protruding ends may protrude from the first roller. Each of the two inner plates may have a pivoting hole, a positioning hole and at least two adjusting holes, in the same way, each of the two outer plates may have a pivoting hole, a positioning hole and an adjusting hole, thus the two inner plates and the two outer plates may have corresponding matching holes, wherein the holes of the two inner plates may correspond to the holes of the two outer plates. Therefore, the pivoting holes of the two inner plates may corresponds with the pivoting holes of the two outer plates, the positioning hole of the two inner plates may correspond with the positioning hole of the two outer plates. For the adjusting holes, one of the at least two adjusting holes of each inner plate may be aligned to the adjusting hole of its corresponding outer plate, as each outer plate may have only one adjusting hole.

Each of the two inner plates may be arranged in one of the protruding ends of the first shaft of the first roller, one inner plate may be arranged in one protruding end and the other inner plate may be arrange in the other protruding end of the first shaft. Subsequently, each of the two outer plates may be arranged in one protruding end of the first shaft of the first roller beside the two inner plates, hence, the first roller may be positioned between the two inner plates and the two inner plates may be positioned between the two outer plates.

The two inner plates may be arranged in the first shaft by introducing the protruding ends of the first shaft through the positioning hole of the two inner plates, subsequently, the two outer plates may be arranged by introducing the protruding ends of the first shaft through the positioning hole of the two outer plates. Consequently, the holes of the two inner plates may be aligned with the holes of the two outer plates. The protruding ends of the first shaft may be supported in the positioning holes of the two inner plates and the two outer plates and may be secured on the outer part of the two outer plates with mechanical means, wherein mechanical means may be arranged in the protruding ends to secure the first shaft of the first roller to the two outer plates. The mechanical means may be a washer and a nut. Additional mechanical means may also be arranged in the first shaft to arrest and support the first roller. The additional mechanical means could be bearings.

In order to join and secure the inner plate with its corresponding outer plate, each pivoting hole of the two inner plates may be aligned with the corresponding pivoting hole of its corresponding outer plate. Hence, to join and secure them the cable pulling device may further comprise two pivoting rods. Each pivoting rod may be introduced into the pivoting holes to join one inner plate with its corresponding outer plate, consequently, the other pivoting rod may be introduced into the pivoting holes to join the other inner plate with its corresponding outer plate, in such a way that each inner plate may rotate in respect to its corresponding outer plate, thereby enabling the rotation of each inner plate in respect of its corresponding outer plate. The pivoting hole may act as a hinge between the inner plates and outer plates, therefore the two inner plates may rotate in respect to its corresponding outer plate, which may have fixed position. As the two inner plates may have rotational flexibility consequently first roller may be moved in the vertical position. The pivoting rods may be any of shaft, screw, bolt or pin. The pivoting rod may be secured with mechanical means to ensure the fixation with the plates.

The cable pulling device may further comprise a second roller, which may comprise a second shaft that passes through it and which protruding ends may protrude from the second roller. It may further comprise two inner plates and two common outer plates, two pivoting rods and two adjusting rods. The two inner plates may be as described above, in total the cable pulling device may have four inner plates, two inner plates for the first roller and two inner plates for the second roller. The two common outer plates may be longer and may have a rectangular shape. Each of the two common outer plates may have two pivoting holes, two positioning holes and two adjusting holes. In each common outer plate, the holes may be distributed at opposite sides and may be arranged in such a way that could be aligned with its corresponding two inner plates. As described above, two inner plates may be arranged in the protruding ends of the first shaft of the first roller and subsequently, the other two inner plates may be arranged in the protruding ends of the second shaft of the second roller. One common outer plate may be arranged in the protruding ends of the first and second shafts of the first roller and the second roller beside the corresponding two inner plates, being the common outer plate common for those two inner plates.

In the same way, the other common outer plate may be arranged in the protruding ends of the first and second shafts of the first roller and the second roller beside the corresponding two inner plates, being the common outer plate common for those two inner plates. The protruding ends of the first and second shafts of the first and second roller may be supported in the corresponding positioning holes of the four inner plates and the two common outer plates and may be secured on the outer part of the common outer plates with mechanical means, such as a washer and a nut. Additional mechanical means may also be arranged in the second shaft to arrest and support the second roller. The additional mechanical means could be bearings. The pivoting hole of each of the four inner plates may be aligned with the pivoting hole of its corresponding common outer plate. There are four pivoting rods, wherein each pivoting rod may be introduced into the pivoting holes to join the inner plate to its corresponding common outer plate, in such a way that each inner plate may rotate in respect to its corresponding common outer plate.

The vertical position of the first roller and/or second roller may be adjusted due to the rotation of the two or four inner plates in respect of the two outer plates or two common outer plates. In order to fix the position of the two or four inner plates in respect with the two outer plates or two common outer plates, two adjusting rods may be needed, four in case there is a second roller. Each inner plate may have one adjusting rod, therefore for a first roller there may be two adjusting rods, and in case of a second roller, there may be four adjusting rods. Each adjusting rod corresponds to one inner plate and may be interchangeable between the at least two adjusting holes of its corresponding inner plate.

The two or four inner plates may be rotated in respect to its corresponding two outer plates or common outer plates in the same direction and fixed in the same position and one of the at least two adjusting holes of each inner plate may be aligned with the adjusting hole of the corresponding outer plate or common outer plate. Hence, each of the two or four adjusting rods may be introduced into the adjusting hole of the inner plate that is aligned with the adjusting hole of the corresponding outer plate or common outer plate to fix the position of each inner plate in respect of its corresponding outer plate or common outer plate. Each adjusting hole may correspond to a different vertical position for the first and/or second roller. There could be at least two adjusting holes or a plurality of adjusting holes in the two or four inner plates, thus having several vertical positions. The at least two adjusting holes of the two or four inner plates may be arranged in linear or semi-circular alignment. The adjusting rods may be any of shaft, screw, bolt or pin.

In order to change the first roller and/or second roller in horizontal position, the positioning holes of the two or four inner plates and the two outer plates or two common outer plates may have a sawtooth shape, having at least two teeth, being each tooth a different position. Generally, the number of teeth may be three, having the first and/or second roller three different horizontal positions. The teeth shape may be any of semicircular, u-shaped, square or trapezoidal. It may be an advantage that the first and/or second roller may be adjusted in the horizontal direction, as in some cases, the first and second rollers may need to be closer or further, e.g. distance to a wall. When the cable pulling device is near to a wall, the first and/or second roller may be placed further using the last position of the positioning holes.

The first roller and/or second roller may be a hollow or solid component. In case of a hollow first and/or second roller, the first and/or second shaft may pass through the first roller and/or second roller and the protruding ends of its first and/or second shaft may protrude them. Furthermore, two bearings may be placed at each first and/or second shaft to arrest and support the first roller and/or second roller. On the other hand, in case the first roller and/or second roller may be a solid component, a first and/or second shaft may be placed on each end or face of the first roller and/or second roller and it may be supported on the positioning holes of the two or four inner plates and two outer plates or common outer plates and may be secured on the outer part of the outer plates or common outer plates with mechanical means. The roller material may be Polyoxymethylene (POM) or any metal.

In general, the shape of the two or four inner plates may be square with rounded or right-angled edges. The two outer plates or the two common outer plates may have different shapes, being the shape of the outer plates any of square, rectangular and the edges may be rounded or right-angled. Furthermore, the two common outer plates may be longer than the two outer plates and may have a rectangular shape as it may hold two inner plates per plate, which may be arranged at the ends of the common outer plates in opposite sides.

The cable pulling device may needed to be hooked at a specific point of the tower structure or a wall, therefore two hooking elements may be added. In case of just having the first roller, each hooking element may be arranged between one of the two inner plates and its corresponding outer plate, thus having one hooking element in each side of the cable pulling device. On the other hand, in case of having the first and second roller, each of the two hooking elements only may be arranged between one of the two inner plates of the first roller and its corresponding common outer plate, thus having one hooking element in each side of the cable pulling device. The two hooking elements may be any of hook, L-shaped rigid bar or crowbar.

Furthermore, the two additional plates may be arranged along the two outer plates or the two common outer plates in the opposite side of the two hooking elements. The two additional plates may be added in case that an additional load may be needed, to balance the weight and the loads of the cable pulling device when the two hooking elements may be arranged. The additional plates may have an elongated hole.

The essential idea of the present invention is that a cable pulling device may be adjustable in horizontal and vertical direction, so it may be used in any wind turbine model. As the two or four inner plates may be rotated in respect to the two outer plates or the two common outer plates, the vertical position of the first roller and/or second may be adjusted. Likewise, as changing the first roller and/or second of positioning hole, the horizontal position may be adjusted. A further advantage is that due to arranging the two hooking elements between the two or four inner plates and the two outer plates or two common outer plates, the cable pulling device may not be limited to be placed into a planar surface, it might be hooked in a part of the structure of the wind turbine during construction.

### BRIEF DESCRIPTION OF THE DRAWINGS

Embodiments of the invention are now described, by way of example only, with reference to the accompanying drawings, of which:
Fig 1 shows a perspective view of a cable pulling device;
Fig 2 shows plain view of an inner plate (40a) and an outer plate (50a); and
Fig 3 shows a plain view of an inner plate (40a) with a positioning hole (70a) with sawtooth shape with U-shape teeth and a plurality of adjusting holes (80a₁, 807a₂, 80a₃, 80a₄... 80aₙ) with linear alignment; and
Fig 4 shows a plain view of an inner plate (40a) with a first roller (10) supported in the positioning hole (70a); and
Fig 5 shows perspective view of an inner plate (40a) rotated in respect of an outer plate (50a) with a pivoting rod (120a) and an adjusting rod (130a); and
Fig 6 shows a plain view of a common outer plate (140a); and
Fig 7 shows a perspective view of a cable pulling device with a first roller (10) and a second roller (11); and
Fig 8 shows a perspective view of a cable pulling device with additional plates (180a, 180b) arranged along the two common outer plates (140a, 140b) and two hooking elements (190a, 190b) arranged between the two inner plates (40a, 40b) and the two common outer plates (140a, 140b).

The illustration in the drawings is in schematic form. It is noted that in different figures, similar or identical elements may be provided with the same reference signs.

### DESCRIPTION OF THE DRAWINGS

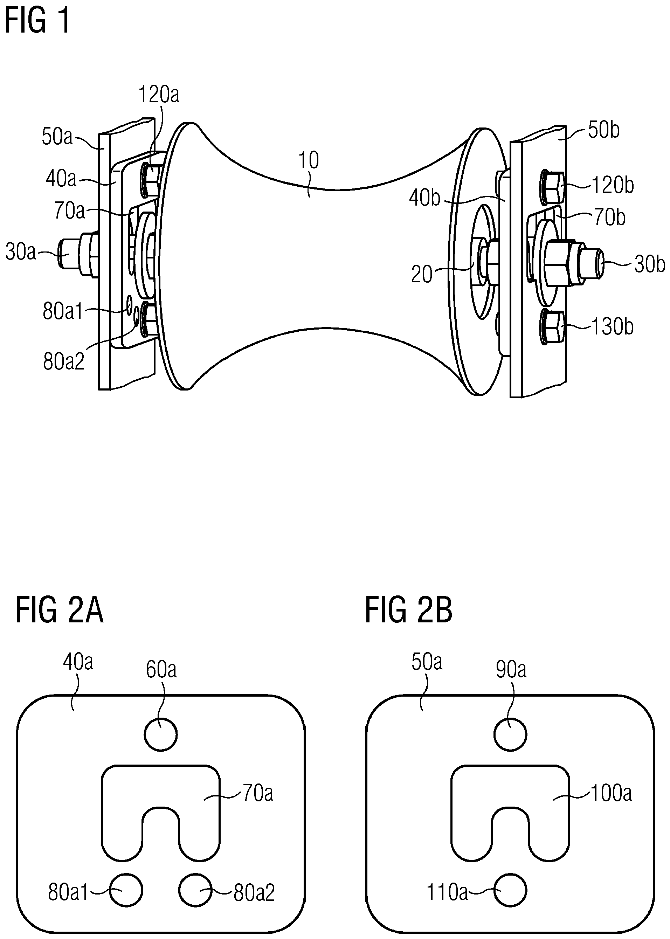

Fig 1 shows a perspective view of a cable pulling device that comprises a first roller (10), two inner plates (40a, 40b) and two outer plates (50a, 50b). The first roller (10) is hollow and has a first shaft (20) that passes through it and which protruding ends (30a, 30b) protrude from the first roller (10). The first roller (10) has additional mechanical means, such as bearings, arranged in the first shaft (20) to arrest and support the first roller (10). The two inner plates (40a, 40b) are arranged in the protruding ends (30a, 30b) of the first shaft (20). The two outer plates (50a, 50b) are arranged in the protruding ends (30a, 30b) besides the two inner plates (40a, 40b), correspondingly. The protruding ends (30a, 30b) of the first shaft (20) are secured to the outer part of the two outer plates (50a, 50b) with mechanical means. Two pivoting rods (120a, 120b) are joining and securing each of the two inner plates (40a, 40b) with its corresponding outer plate (50a, 50b).

Fig 2 shows plain view of an inner plate (40a) and an outer plate (50a). The inner plate (40a) has a pivoting hole (60a), a positioning hole (70a) and at least two adjusting holes (80a₁, 80a₂). The outer plate (50a) has a pivoting hole (90a), a positioning hole (100a) and an adjusting hole (110a). The holes of the inner plate (40a) are corresponding matching holes with the holes of the outer plate (50a).

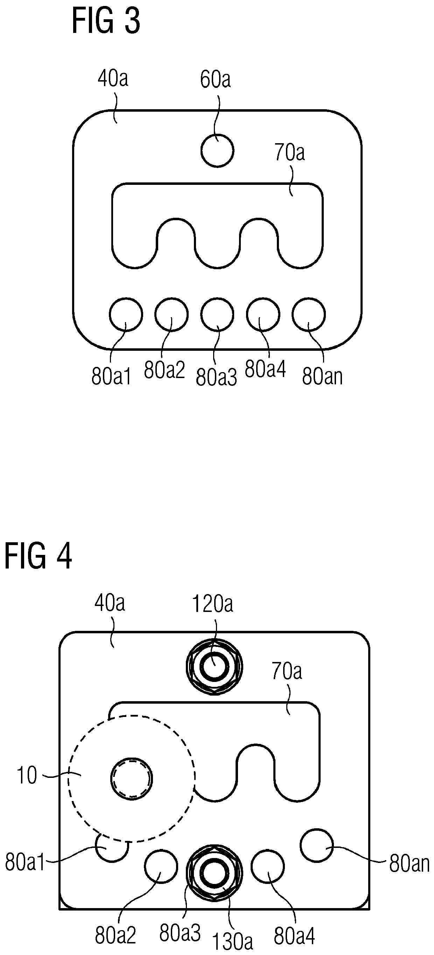

Fig 3 shows a plain view of an inner plate (40a) with a positioning hole (70a) with sawtooth shapes with U-shape teeth. Each teeth of the positioning hole (70a) is a different horizontal position. Generally, there are three different horizontal positions in the positioning hole (70a), nevertheless it can have at least two teeth or a plurality. The inner plate (40a) has a plurality of adjusting holes (80a₁, 807a₂, 80a₃, 80a₄... 80aₙ) with linear.

Fig 4 shows a plain view of an inner plate (40a) that has a first roller (10) supported in the positioning hole (70a). The positioning hole (70a) has three teeth, thus the first roller (10) has three different horizontal positions.

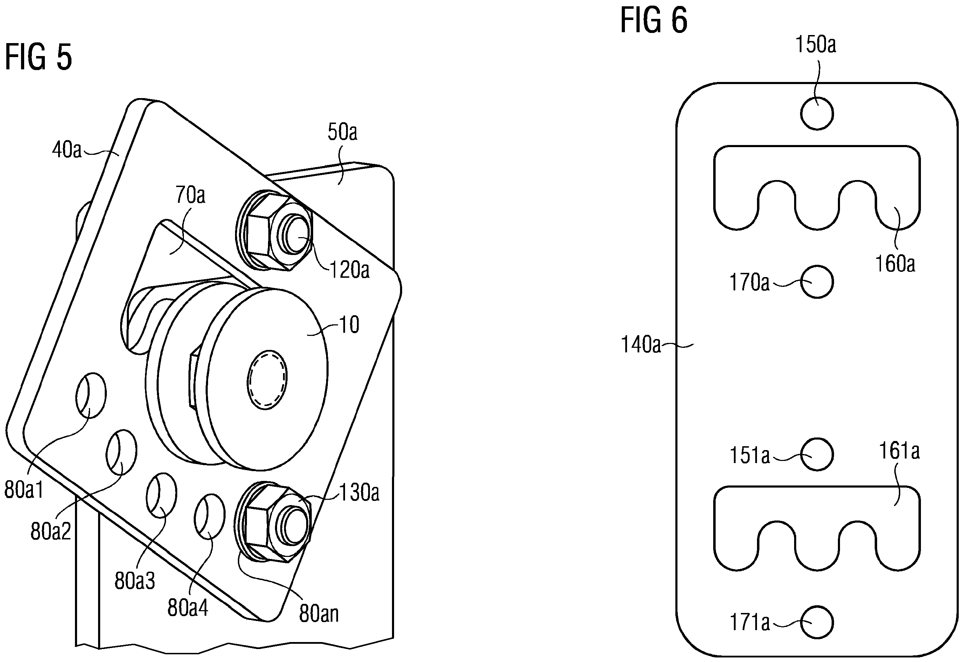

Fig 5 shows perspective view of an inner plate (40a) rotated in respect of an outer plate (50a). The pivoting hole (60a) of the inner plate (40a) is aligned with the pivoting hole (90a) of the outer plate (50a). The pivoting rod (120a) joins and secure the inner plate (40a) with the outer plate (50a). The pivoting rod (120a) act as a hinge, thus the inner plate (40a) can be rotated in respect with the outer plate (50a). One adjusting hole (80aₙ) of the plurality of the adjusting holes (80a₁, 807a₂, 80a₃, 80a₄... 80aₙ) of the inner plate (40a) is aligned with the adjusting hole (110a) of the outer plate (50a). The adjusting rod (130a) is introduced into the aligned adjusting holes (80aₙ, 110a) to fix the position of the inner plate (40a) in respect of the outer plate (50a).

Fig 6 shows a plain view of a common outer plate (140a), it has two pivoting holes (150a, 151a), two positioning holes (160a, 161a) and two adjusting holes (170a, 171a).

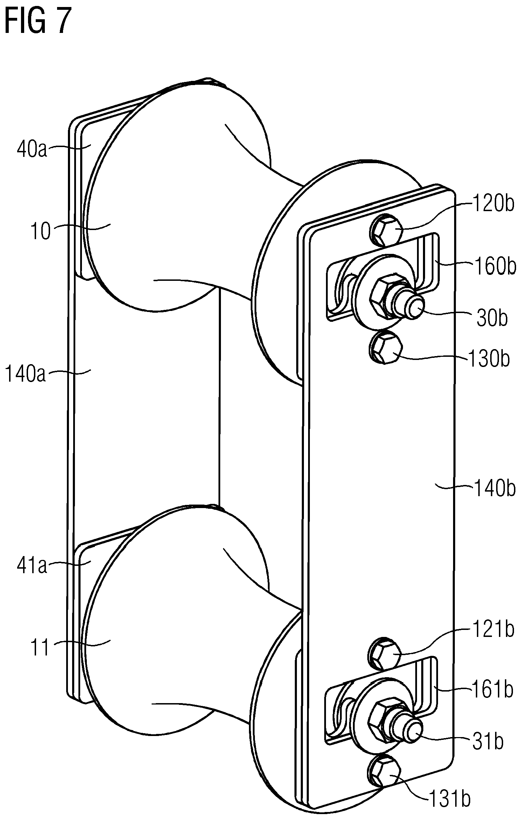

Fig 7 shows a perspective view of a cable pulling device with a first roller (10) and a second roller (11). The inner plates (40a, 40b) are arranged in the protruding ends (30a, 30b) of the first shaft (20) that passes through the first roller (10). The inner plates (41a, 41b) are arranged in the protruding ends (31a, 31b) of the second shaft (21) that passes through the second roller (11). The common outer plate (140a) is arranged in the protruding ends (30a, 31a) of the first shaft (20) and second shaft (21) beside the two inner plates (40a, 41a). The common outer plate (140b) is arranged in the protruding ends (30b, 31b) of the first shaft (20) and second shaft (21) beside the two inner plates (40b, 41b). The pivoting rod (120b) joins and secures the inner plate (40b) with the common outer plate (140b), as well as the pivoting rod (121b) joins and secures the inner plate (41b) with the common outer plate (140b), being the common outer plate (140b) common for the inner plates (40b, 41b) as shown. The adjusting rods (130b, 131b) fix the position of the inner plates (40b, 41b) in respect of the common outer plate (140b) as shown.

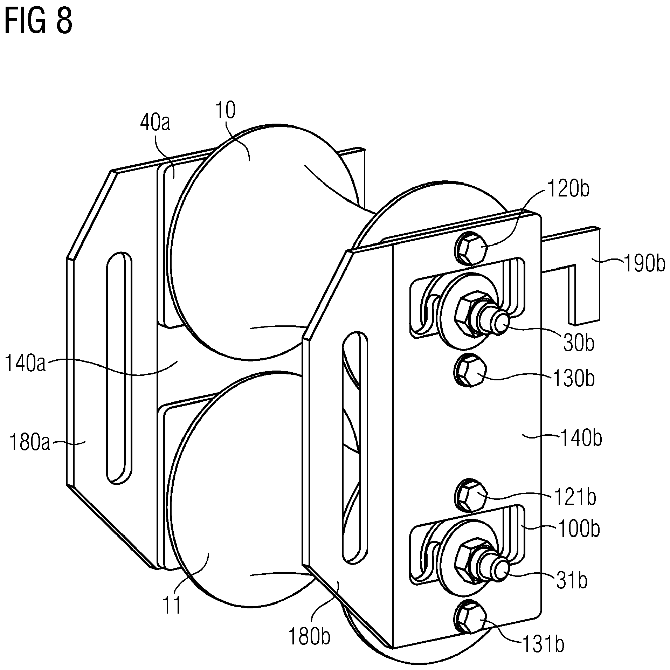

Fig 8 shows a perspective view of a cable pulling device a first roller (10) and a second roller (11) as described in Fig 7. Each of the two common outer plates (140a, 140b) have attached along an additional plate (180a, 180b) with an elongated hole. In the opposite side common outer plates (140a, 140b) there is arranged two hooking elements (190a, 190b). The hooking element (190a) is arranged between the inner plate (40a) and the common outer plate (140a) and the hooking element (190b) is arranged between the inner plate (40b) and the common outer plate (140b), as shown.

In a first embodiment of the invention, the cable pulling device may comprise a first roller (10) with a first shaft (20) that passes through it and with protruding ends (30a, 30b) that protrudes from the first roller (10). It further comprises two inner plates (40a, 40b) and the two outer plates (50a, 50b), that are arranged as described in Fig 1.

The horizontal position of first roller (10) may be changed by changing the first roller (10) of position in the positioning hole (70a, 70b, 100a, 100b) of the inner plates (40a, 40b) and outer plates (50a, 50b). The positioning holes (70a, 70b, 100a, 100b) have sawtooth shape sawtooth shape, having at least two teeth, being each tooth a different position, as shown in Fig 4.

To adjust the vertical position of the first roller (10), the inner plates (40a, 40b) may be rotated in respect of the outer plates (50a, 50b). Two pivoting rods (120a, 120b) may join and secure each of the two inner plates (40a, 40b) with its corresponding outer plate (50a, 50b), as shown in the Fig 1. Each of the two pivoting rods (120a, 120b) may be introduced into the pivoting hole (60a, 60b) of its corresponding inner plate (40a, 40b) and outer plate (50a, 50b). The pivoting rod (120a) act as a hinge, thus the inner plate (40a) can be rotated in respect with the outer plate (50a), as well as the pivoting rod (120b) enables the inner plate (40b) to be rotated in respect with the outer plate (50b). To fix the position of the inner plates (40a, 40b) with its corresponding outer plate (50a, 50b) after being rotated, two adjusting rods (130a, 130b) may be needed. The two adjusting rods (130a, 130b) may be pulled out, the inner plates (40a, 40b) may be rotated in respect of the outer plates (50a, 50b). Subsequently, one of the at least two adjusting holes (80a₁, 80a₂, 80b₁, 80b₂) of each inner plate (40a, 40b) may be aligned with the adjusting hole (110a, 110b) of the corresponding outer plate (50a, 50b) and finally each of the two adjusting rods (130a, 130b) may be introduced into the adjusting holes that are aligned, as shown in Fig 5.

In a second embodiment of the invention, the cable pulling device comprises two rollers. Particularly, a first roller (10) and a second roller (11), four inner plates (40a, 40b, 41a, 41b) and two common outer plates (140a, 140b), the components. The additional plates may be arranged as described in Fig 7. The horizontal position of the first roller (10) may be changed in the same way as described for the first embodiment in respect of the two common outer plates. Likewise, to change the horizontal position of the second roller (11), the second roller (11) may be supported in another position of the positioning holes (71a, 71b, 161a, 161b) of the inner plates (41a, 41b) and the corresponding common outer plates (140a, 140b).

The vertical position of the first roller (10) may be adjusted in the same way as described for the first embodiment in respect of the two common outer plates. Similarly, the vertical position of the second roller (11) may be adjusted by pulling out the adjusting rods (131a, 131b), rotate the inner plates (41a, 41b) in respect to the two common outer plates (140a, 140b) and aligning one of the at least two adjusting holes (81a₁, 81a₂, 81b₁, 81b₂) of each inner plate (41a, 41b) with the adjusting hole (171a, 171b) of its corresponding common outer plate (140a, 140b) and finally the adjusting rods (131a, 131b) may be introduced into the adjusting holes that are aligned.

In a third embodiment of the invention, the cable pulling device may have two hooking elements (190a, 190b). Each hooking element (190a, 190b) may be arranged between one of the two inner plates (40a, 40b) and its corresponding outer plate (50a, 50b), thus having one hooking element (190a, 190b) in each side of the cable pulling device. In case of having two rollers, there may be only two hooking elements (190a, 190b) and it may be arranged between the two inner plates (40a, 40b) of the first roller (10) and its corresponding common outer plate (140a, 140b), thus having one hooking element (190a, 190b) in each side of the cable pulling device, as shown in Fig 8. The two hooking elements (190a, 190b) may be any of hook, L-shaped rigid bar or crowbar. By having two hooking elements (190a, 190b), the cable pulling device may not be limited to be placed in a planar surface, as it may be hooked in a structure such as a wall. E.g. during the construction of the tower, if there is a need to install cables, the cable pulling device may be hooked in a wall of the tower and from that point the cable may be pulled.

Furthermore, two additional plates (180a, 180b) may be arranged along the two outer plates (50a, 50b) or the two common outer plates (140a, 140b) in the opposite side of the two hooking elements (190a, 190b). The two additional plates (180a, 180b) may be added in case that an additional load may be needed, to balance the weight and the loads of the cable pulling device when the two hooking elements (190a, 190b) are present, as shown in Fig 8. The additional plates may have (180a, 180b) an elongated hole.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. A cable pulling device comprising
- A first roller (10), comprising a first shaft (20) that passes through it and which protruding ends (30a, 30b) protrude from the first roller (10), said cable pulling device further comprise
- two inner plates (40a, 40b), each one to be arranged in each protruding end (30a, 30b) of the first shaft (20) of the first roller (10),
- two outer plates (50a, 50b), each one to be arranged in each protruding end (30a, 30b) of the first shaft (20) of the first roller (10) beside the inner plates (40a, 40b),
- two pivoting rods (120a, 120b),
- two adjusting rods (130a, 130b),
**characterised in that** each of the two inner plates (40a, 40b) comprise a pivoting hole (60a, 60b), a positioning hole (70a, 70b) and at least two adjusting holes (80a₁, 80a₂, 80b₁, 80b₂); and
wherein each of the two outer plates (50a, 50b) comprise a pivoting hole (90a, 90b), a positioning hole (100a, 100b) and an adjusting hole (110a, 110b); and
wherein said each pivoting hole (60a, 60b) of each inner plate (40a, 40b) is aligned with the corresponding pivoting hole (90a, 90b) of its corresponding outer plate (50a, 50b); and
the pivoting rod (120a) is introduced into the pivoting holes (60a, 90a) to join the inner plate (40a) with the outer plate (50a) and correspondingly the pivoting rod (120b) is introduced into the pivoting holes (60b, 90b) to join the inner plate (40b) with the outer plate (50b), in such a way that each inner plate (40a, 40b) can rotate in respect to its corresponding outer plate (50a, 50b).

2. A cable pulling device according to claim 1, further comprise
- a second roller (11) comprising a second shaft (21) that passes through it and which protruding ends (31a, 31b) protrude from the second roller (11),
- two inner plates (41a, 41b), each one to be arranged in each protruding end (31a, 31b) of the second shaft (21) of the second roller (11),
- two common outer plates (140a, 140b), that are common for the first roller (10) and the second roller (11),
- two pivoting rods (121a, 121b),
- two adjusting rods (131a, 131b),
**characterised in that** each of the two inner plates (41a, 41b) comprise a pivoting hole (61a, 61b), a positioning hole (71a, 71b) and at least two adjusting holes (81a₁, 81a₂, 81b₁, 81b₂) ; and
wherein each of the two common outer plates (140a, 140b) comprise two pivoting holes (150a, 150b, 151a, 151b), two positioning holes (160a, 160b, 161a, 161b) and two adjusting holes (170a, 170b, 171a, 171b); and
wherein the common outer plate (140a), to be arranged in the protruding ends (30a, 31a) of the first and second shafts (20, 21) of the first roller (10) and second roller (11) beside the corresponding inner plates (40a, 41a), being the common outer plate (140a) common for the inner plates (40a, 41a), and
and the common outer plate (140b), to be arranged in the protruding ends (30b, 31b) of the first and second shafts (20, 21) of the first roller (10) and the second roller (11) beside the corresponding inner plates (40b, 41b), being the common outer plate (140b) common for the inner plates (40b, 41b), and
wherein said each pivoting hole (60a, 60b, 61a, 61b) of each inner plate (40a, 40b, 41a, 41b) is aligned with the corresponding pivoting hole (150a, 150b, 151a, 151b), of its corresponding common outer plate (140a, 140b); and
the pivoting rod (120a) is introduced into the pivoting holes (60a, 150a) to join the inner plate (40a) with the common outer plate (140a) and correspondingly the pivoting rod (120b) is introduced into the pivoting holes (60b, 150b) to join the inner plate (40b) with the common outer plate (140b), and
in the same way, the pivoting rod (121a) is introduced into the pivoting holes (61a, 151a) to join the inner plate (41a) with the common outer plate (140a) and correspondingly the pivoting rod (121b) is introduced into the pivoting holes (61b, 151b) to join the inner plate (41b) with the common outer plate (141b), in such a way that each inner plate (40a, 40b, 41a, 41b) can rotate in respect to its corresponding common outer plate (140a, 140b) .

3. A cable pulling device according to clam 1 or 2, **characterised in that** the at least two adjusting holes (80a₁, 80a₂, 80b₁, 80b₂) of each inner plate (40a, 40b, 41a, 41b) are arranged in linear or semicircular alignment.

4. A cable pulling device according to claim 3, **characterised in that** each adjusting rod (130a, 130b, 131a, 131b) corresponds to one inner plate (40a, 40b, 41a, 41b) and is interchangeable between the at least two adjusting holes (80a₁, 80a₂, 80b₁, 80b₂, 81a₁, 81a₂, 81b₁, 81b₂) of its corresponding inner plate (40a, 40b, 41a, 41b).

5. A cable pulling device according to claim 4, **characterised in that** each inner plate (40a, 40b) is rotated in respect to its corresponding outer plate (50a, 50b), wherein one of the at least two adjusting holes (80a₁, 80a₂, 80b₁, 80b₂) of each inner plate (40a, 40b) is aligned with the adjusting hole (110a, 110b) of its corresponding outer plate (50a, 50b), wherein each adjusting rod (130a, 130b) is introduced into the aligned holes to fix the position of each inner plate (40a, 40b) in respect of its corresponding outer plate (50a, 50b).

6. A cable pulling device according to claim 4, **characterised in that** each inner plate (40a, 40b, 41a, 41b) is rotated in respect to its corresponding common outer plate (140a, 140b), wherein one of the at least two adjusting holes (80a₁, 80a₂, 80b₁, 80b₂, 81a₁, 81a₂, 81b₁, 81b₂) of each inner plate (40a, 40b, 41a, 41b) is aligned with the adjusting hole (170a, 170b) of its corresponding common outer plate (140a, 140b), wherein each adjusting rod (130a, 130b, 131a, 131b) is introduced into the aligned holes to fix the position of each inner plate (40a, 40b, 41a, 41b) in respect of its corresponding common outer plate (140a, 140b).

7. A cable pulling device according to claim 4 to 6, **characterised in that** the adjusting rods (130a, 130b, 131a, 131b) are any of shaft, screw, bolt or pin.

8. A cable pulling device according to claim 1 or 2, **characterised in that** the positioning holes (70a, 70b, 71a, 71b) of the two or four inner plates (40a, 40b, 41a, 41b) and the positioning holes (100a, 100b, 160a, 160b, 161a, 161b) of the two outer plates (50a, 50b) or the two common outer plates (140a, 140b) have sawtooth shape, having at least two teeth.

9. A cable pulling device according to the claim 8, **characterised in that** the shape of the teeth of positioning holes (70a, 70b, 71a, 71b) of the two or four inner plates (40a, 40b, 41a, 41b) and the positioning holes (100a, 100b, 160a, 160b, 161a, 161b) of the two outer plates (50a, 50b) and the two common outer plates (140a, 140b) is any of semicircular, u-shaped, square or trapezoidal.

10. A cable pulling device according to claim 1, further comprising mechanical means configured to secure the first shaft (20) to the two outer plates (50a, 50b), the mechanical means to be arranged in the protruding ends (30a, 30b) of the first shaft (20) of the first roller (10).

11. A cable pulling device according to claim 2, further comprising mechanical means configured to secure the second shaft (21) to the two common outer plates (140a, 140b), the mechanical means to be arranged in the protruding ends (31a, 31b) of the second shaft (21) of the second roller (11).

12. A cable pulling device according to claim 1 or 2, **characterised in that** the first roller (10) and the second roller (11) are hollow or solid.

13. A cable pulling device according to the claim 1 or 2, **characterised in that** the shape of the two outer plates (50a, 50b) or the two common outer plates (140a, 140b) is any of rectangular or square and the edges are rounded or right-angled.

14. A cable pulling device according to the claim 1 or 2, **characterised in that** the each of the two outer plates (50a, 50b) or each of the two common outer plates (140a, 140b) have attached along an additional plate (180a, 180b) with an elongated hole.

15. A cable pulling device according to the claim 14, further comprising hooking elements (190a, 190b), wherein the hooking element (190a) to be arranged between the inner plate (40a) and its corresponding outer plate (50a) or its corresponding common outer plate (140a), and the hooking element (190b) to be arranged between the inner plate (40b) and its corresponding outer plate (50b) or its corresponding common outer plate (140b), wherein the hooking elements (190a, 190b) are any of hook, L-shaped rigid bar or crowbar.
